(19) Europäisches Patentamt
European Patent Office
Office européen des brevets

(11) Publication number: **0 250 090 B1**

# (12) EUROPEAN PATENT SPECIFICATION

(45) Date of publication of patent specification: **29.01.92**

(51) Int. Cl.[5]: **C09J 133/04**, C08F 220/00

(21) Application number: **87304370.7**

(22) Date of filing: **18.05.87**

## (54) Storage stable latently curable acrylic formulations employing polymeric hydroperoxides.

(30) Priority: **22.05.86 US 866431**

(43) Date of publication of application:
**23.12.87 Bulletin 87/52**

(45) Publication of the grant of the patent:
**29.01.92 Bulletin 92/05**

(84) Designated Contracting States:
**DE FR GB IT**

(56) References cited:
**DE-A- 1 594 095**
**US-A- 2 911 387**

(73) Proprietor: **LOCTITE CORPORATION**
**705 North Mountain Road**
**Newington, Connecticut 06111(US)**

(72) Inventor: **Rich, Richard Douglas**
**164, Scoville Road**
**Avon CT 06001(US)**

(74) Representative: **Marchant, James Ian et al**
**Elkington and Fife Prospect House 8 Pembroke Road**
**Sevenoaks, Kent TN13 1XR(GB)**

EP 0 250 090 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

It has long been known that organic hydroperoxide compounds are useful in formulating storage stable latently polymerizable acrylic monomer compositions. Such compositions may be formulated to induce polymerization at ambient temperatures under anaerobic conditions, or by heating or contacting the formulation with a chemical activator such as a primer solution or a monomer/activator formulation free of hydroperoxide. See for instance, U.S. 4,574,142; 4,442,267; 3,890,407 and GB 2,121,811A. The hydroperoxide compounds used in such formulations, however, have typically been monofunctional or occasionally difunctional materials.

In U.S. 2,911,391; 2,911,398; and 2,911,387 there are described polymeric hydroperoxide compounds prepared from polymers having hydrogen atoms attached to tertiary carbon atoms in the polymer chain or on pendant groups by oxidation of the polymer. In Vandenberg, U.S. Patent 2,911,391, in particular, there are described auto-oxidation methods for producing polymeric hydroperoxide compounds such as polyisopropyl-α-methylstyrene polymers and copolymers. Such polymeric hydroperoxides are described as useful for preparing polymeric phenol compounds and for preparing graft copolymers by initiating polymerization of other vinyl monomers such as styrene or methylacrylate. This reference teaches that the amount of hydroperoxide groups may be varied from 0.1 to 80 percent of the theoretical value (i.e., the number of recurring isopropenylphenyl groups). Examples of polymers used for polyphenol production are given with up to 47% hydroperoxide substitution. However, the polymers exemplified as polymerization intiators are all in the range of 0.48 - 9.9% substitution. Furthermore, none of the polymerization initiation examples involve storage stable formulations. That is, none of such examples involve latently polymerizable systems in which the polymeric hydroperoxide is kept in contact with monomer for prolonged periods of time before polymerization is initiated. The fact that these polymeric hydroperoxides form graft polymers off of the polymeric hydroperoxide backbone would lead one to conclude that it would be difficult or impossible to formulate such storage stable compositions because of the much more rapid molecular weight build up which can result from partial polymerization over time.

## SUMMARY OF THE INVENTION

The present invention pertains to improved storage stable (meth)acrylate ester compositions containing hydroperoxide initiators, which are curable at ambient temperatures under anaerobic conditions and/or with chemical activation (meth)acrylate ester compositions containing hydroperoxide initiators. In the improved compositions the hydroperoxide initiator is a polymer or copolymer having a plurality of pendent groups of the formula;

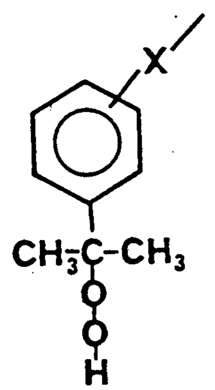

I

where X is a direct bond or a divalent organic linking group to the polymer backbone.

One class of preferred polymeric hydroperoxides are oxidized copolymers of isopropyl alpha-methylstyrene and monofunctional (meth)acrylate-esters such as alkyl acrylate or methacrylate esters, hydroxy alkyl (meth)acrylates, cycloalipathic methacrylates such as dicyclopentadienylethyl methacrylate and cyclohexyl methacrylate, etc.; maleic anhydride or maleate esters; or other styrenic compounds.

A class of particularly preferred polymeric hydroperoxides are block copolymers of isopropyl alphamethylstyrene and other anionically polymerizable monomers such as methylmethacrylate or cyclic siloxane compounds such as octamethylcyclotetrasiloxane or hexamethylcyclotrisiloxane. Such block copolymers allow the solubility of the polymeric hydroperoxide to be tailored to a wide variety of monomer systems and

desired structural characteristics in the cured composition. A still further class of polymeric hydroperoxides suitable for use in the invention are the oxidized polymers and copolymers, including block copolymers, of (meth)acrylate esters of the formula:

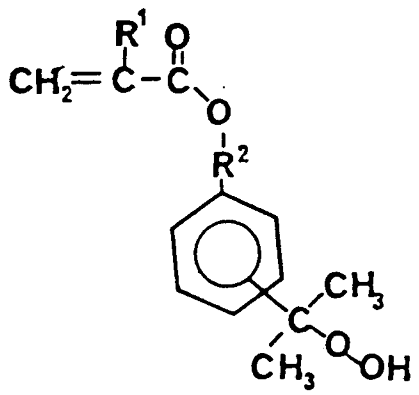

II

Where R1 is H or methyl and where R2 is a divalent hydrocarbon group which may optionally be interrupted by one or more ether oxygen atoms.

A still further aspect of the invention comprises novel polymeric hydroperoxides comprising the oxidized polymers and copolymers of the methacrylate esters of formula II.

## DETAILED DESCRIPTION OF THE INVENTION

The latently polymerizable (meth)acrylate ester compositions of the invention comprise as essential ingredients a (meth)acrylic ester and a polymeric hydroperoxide compound of Formula I. The term "(meth)-acrylic ester" as used herein is intended to cover compounds with both acrylate and methacrylate ester groups. The (meth)acrylic esters may contain one or more such groups. Examples of such compounds are given in U.S. 3,969,552 in columns 3-4 and include cyclohexylmethacrylate, tetrahydrofurfuryl methacrylate, hydroxyethyl acrylate, hydroxypropyl methacrylate, t-butylaminoethyl methacrylate, cyanoethylacrylate, chloroethyl methacrylate, t-butyl cyclohexyl methacrylate, decyl methacrylate, dodecyl methacrylate, di-, tri- and tetraethyleneglycol dimethacrylate, dipropyleneglycol dimethacrylate; polyethyleneglycol dimethacrylate; di(pentamethyleneglycol) dimethacrylate; tetraethyleneglycol diacrylate; tetraethyleneglycol di(chloroacrylate); diglyerol diacrylate; diglycerol tetramethacrylate; tetramethylene dimethacrylate; ethylene dimethacrylate; and neopentylglycol diacrylate.

Prepolymers with terminal or pendant (meth)acrylic groups may also be usefully employed such as urethane-acrylates, prepared for instance by reaction of an isocyanate functional prepolymer with a hydroxyalkyl (meth)acrylate ester; epoxy acrylates, prepared for example by reaction of epoxy functional prepolymers with acrylic or methacrylic acid; and acrylic functional polyorganosiloxanes prepared for instance by condensation of a hydroxy terminated polydihydrocarbyl siloxane with a (meth)acryloxyalkyl silane having one or more hydrolyzable groups thereon.

The polymeric hydroperoxide compound may be prepared from poly-isopropyl-α-methyl styrene polymers or copolymers by auto-oxidation as described in Vandenberg U.S. 2,911,391. Other suitable polymers for preparing hydroperoxides used in the inventive compositions are the polymers of an isopropylbenzyl ester of acrylic or methacrylic acid. The monomers of such polymers are described in Chem. Abst. 60: 14550b as useful for perfumes. Polymerization and auto-oxidation of such monomers may be accomplished by ordinary acrylic polymerization techniques and the auto-oxidation procedure discussed above. The isopropenylbenzyl (meth)acrylic polymers and copolymers are somewhat preferred over ordinary polymers or copolymers of isopropyl-α -methyl styrene because of their improved solubility in the (meth)acrylic ester compounds of the formulations.

Particularly preferred for solubility purposes, however, are block copolymers of p-isopropyl-α -methylstyrene or p-isopropenylbenzyl (meth)acrylate and another monomer selected for the solubility of its polymer in the (meth)acrylic ester compound(s) used in the inventive formulation. Surprisingly, such block copolymers also appear to give substantially more stable latently curable formulations than the monopolymers or random copolymers. For instance, the auto-oxided block copolymer formed by the sequential anionic polymerization of p-isopropyl-α-methyl styrene and methyl methacrylate has substantially improved solubility and stability in acrylic ester formulations compared to an p-isopropenyl-α-methyl styrene.

A particularly surprising feature of the invention is that practical storage stable formulations can be prepared using only conventional stabilizers in conventional amounts with the degree of conversion of isopropyl groups to -$C(CH_3)_2OOH$ groups of greater than 50%. In fact, it is generally preferred that the degree of conversion be in excess of 50%, most suitably 55-75%.

The polymeric hydroperoxides are suitably employed at levels of between 0.1% and 10% by weight of the total composition, although solubility limits on particular polymers may significantly narrow this range for those polymers. Likewise, the range may be narrowed for polymers, such as oxidized homopolymers of isopropyl-alpha-methyl styrene, which destabilize the composition. Preferably the polymers are employed at levels of 0.5-5%.

The formulations of the invention will, as noted above, also typically include conventional stabilizers in conventional amounts. One class of such stabilizers are the quinone type such as beta-naphthoquinone, p-benzoquinone and 2-methoxy-1,4-naphthoquinone. Compositions employing such stabilizers are more fully described in U.S. 3,043,820. Phenolic stabilizers, such as hydroquinone butylated hydroxytoluene (BHT) and 2,6-di-t-butyl-p-cresol, may also be usefully employed in conventional amounts.

Metal chelators which have also been described as useful stabilizers for anaerobic formulations may likewise be employed in the inventive formulations. Formulations employing such chelators are described for instance in U.S. 4,038,475. Useful chelators include tetrasodium EDTA, phosphonic acid stabilizers and the chelators described in Col. 3, lines 51-56 of U.S. 4,416,921.

Polymerization accelerators may also be employed in conventional amounts including acetylphenylhydrazine, various secondary or tertiary amine compounds such as tetrahydroquinoline, dimethylaniline, dimethyl-p-toludine and diethyl-p-toludine, and organic sulfimide compounds or analogs thereof such as saccharin and the accelerator compounds described in U.S. 4,513,127. A further discussion of accelerators and their conventional levels may be found in U.S. 3,794,610 at columns 5-6.

Other typical ingredients which can be used if desired to impart commercially desirable properties to the composition are thickeners, dyes, adhesives agents and thixotropic agents. Such materials can be used in such combination and proportions as desired, provided they do not adversely affect the anaerobic nature of the composition, or other essential properties thereof. While exceptions may exist in some cases, these materials in total generally do not comprise more than about 50% by weight of the total composition, and usually not more than about 20% by weight of the composition.

While the inventive compositions are advantageously employed in anaerobic formulations, as exemplified herein below, other (meth)acrylic formulations not traditionally referred to as anaerobic, such as the formulations described in U.S. Patents 4,574,142, 4,442,267, and 3,890,407 or in GB 2,121,811A, may advantageously also be formulated in accordance with the invention. The formulations described in the first three references employ hydroperoxide catalysts in methacrylic formulations but are activated to cure by contact with an amine/aldehyde condensation product such as Dupont 808TM. The formulations of the former reference are activated to cure by contact or mixture with transition metal salt/(meth)acrylic ester formulations.

The invention may be illustrated by the following non-limiting examples.

EXAMPLE 1.

A mixture of m- and p-isopropyl- -methylstyrene was polymerized with borontrifluoride etherate, a cationic initiator. This polymerization was carried out in a toluene solution which had been refluxed with a Dean Stark trap to remove traces of moisture. Air was excluded by repeated evacuation and back-filling with argon. The solution contained 10 ml (8.59 g) isopropyl-$\alpha$-methylstyrene and 30 ml toluene. Approximately 15 ml of the toluene was removed in the drying process. The solution was cooled to -70 °C by immersion in a dry ice-acetone bath. The cationic initiator (0.10 ml) borontrifluoride etherate (BF3.Et20) was added with a syringe through a rubber septum. The solution was stirred overnight with a magnetic stirrer and was then warmed to room temperature and filtered into 300 ml of vigorously stirred isopropanol. The solid polymer was filtered off, washed with 2-5 ml portions of isopropanol and dried in a vacuum oven at 60 °C. The yield was 7.46 g (83.4%). The dried polymer was redissolved in 10 ml toluene and reprecipitated by filtering the toluene solution into 200 ml vigorously stirred isopropanol. The reprecipitated polymer was washed with 2-5 ml portions of isopropanol and dried in the vacuum oven with a recovery of 80%.

The poly(isopropyl-$\alpha$-methylstyrene) was autoxidized by a slight modification of the procedure described by Vandenberg in U.S. patent 2,911,391. The solvent used was diisopropylbenzene and the initiator was diisopropylbenzene hydroperoxide instead of cumene and cumene hydroperoxide as were used by Vandenberg. The poly(isopropyl-$\alpha$-methylstyrene) (3.75 g) was dissolved in 10 ml diisopropylbenzene, diisopropylbenzene hydroperoxide (0.3 ml) and calcium hydroxide (0.3 g) were added and the solution was

stirred with a magnetic stirrer. The flask was heated with an electric heating mantle and the temperature was controlled with a Therm-O-WatchTM controller. Oxygen was bubbled through the solution with a capillary tube at a rapid but unmeasured rate. The solution was held at 90 °C for 72 hours while the oxygen addition was continued.

After the auto-oxidation reaction was completed the viscous yellow solution was thinned by the addition of 10 ml toluene and was filtered into 200 ml vigorously stirred hexane. The somewhat gummy precipitate was separated from the hexane by decantation and redissolved in 20 ml toluene. The toluene solution was filtered into another 200 ml of vigorously stirred hexane to reprecipitate the polymeric hydroperoxide. The polymer was filtered off, washed with 10 ml hexane and dried in the vacuum oven overnight with no heat. The recovery of polymeric hydroperoxide was 2.64 g (70%). The active oxygen content was measured by iodometry and was found to be 5.79% which is equivalent to 66 mole % conversion to the hydroperoxide.

A series of formulations were prepared using the described polymeric hydroperoxide to test the effectiveness of the initiator in an anaerobic adhesive and compare it to cumene hydroperoxide.

| Expt # | Triethylene glycol di-methacrylate (g) | Saccharin (g) | 1-Acetyl-2-phenyl-hydrazine (g) | Maleic acid (g) | Cumene hydro-peroxide (g) | Polymeric hydro-peroxide (g) | NQ 5% in PEGMA (g) | Na4EDTA 3% in MeOH (ml) |
|---|---|---|---|---|---|---|---|---|
| 1 | 19.40 | 0.30 | 0.20 | 0.10 | --- | --- | 0.04 | 0.20 |
| 2 | 19.20 | 0.30 | 0.20 | 0.10 | 0.20 | --- | 0.04 | 0.20 |
| 3 | 19.00 | 0.30 | 0.20 | 0.10 | 0.40 | --- | 0.04 | 0.20 |
| 4 | 19.20 | 0.30 | 0.20 | 0.10 | --- | 0.20 | 0.04 | 0.20 |
| 5 | 19.00 | 0.30 | 0.20 | 0.10 | --- | 0.40 | 0.04 | 0.20 |

The following results were obtained with these formulations.

| Expt# | 82°C stability (hrs) | 90 min mean | | cure s.d. | | 24 hr mean | | cure s.d. | |
|---|---|---|---|---|---|---|---|---|---|
| 1 | >48 | 1.81/2.71 | (16/24) | [0.79/0] | [(7/0)] | 16.27/29.38 | (144/260) | [2.71/10.51] | [(24/93)] |
| 2 | >48 | 15.37/36.61 | (136/324) | [4.18/11.75] | [(37/104)] | 21.69/3.84 | (192/304) | [5.42/4.18] | [(48/37)] |
| 3 | >48 | 14.00/25.76 | (124/228) | [3.39/8.93] | [(30/79)] | 26.21/40.67 | (232/360) | [1.58/4.07] | [(14/36)] |
| 4 | >48 | 13.56/22.59 | (120/200) | [4.75/8.81] | [(42/78)] | 23.95/38.87 | (212/344) | [2.03/3.95] | [(18/35)] |
| 5 | >48 | 18.08/33.89 | (160/300) | [2.03/0] | [(18/0)] | 28.47/45.19 | (252/400) | [2.26/4.75] | [(20/42)] |
| | S(pooled) | 3.36/7.68 | | | (29.7/68) | 3.12/6.05 | | | (27.6/53.5) |
| | d.f. | | | | 10 | | | | 10 |
| | t (95% conf. level) | | | | 2.23 | | | | 2.23 |
| | min. dif. | 4.29/9.94 | | | (38/88) | 3.95/7.79 | | | (35/69) |

The cure tests on nuts and bolts were carried out in triplicate and the standard deviation from the mean is shown in the table.

The standard deviations were pooled using a standard statistical procedure and the minimum difference was calculated for a 95% confidence level with the Student's t distribution. With a 90 minute cure both the 1 and the 2% levels of the polymeric hydroperoxide are significantly stronger than with no peroxide and essentially equivalent to cumene hydroperoxide. The same is true with the 24 hour cure which is probably

the ultimate cure.

EXAMPLE 2.

The polymeric hydroperoxide prepared as described in example 1 was formulated with another type of anaerobic cure system to test the effectiveness of the initiator and compare it to cumene hydroperoxide.

| Expt # | Triethylene glycol di-methacrylate (g) | Saccharin (g) | N,N-Dimethyl-p-toluidine (g) | Cumene hydro-peroxide (g) | Polymeric hydro-peroxide (g) | NQ 5% in PEGMA (g) | Na4EDTA 3% in MeOH/H20 (ml) |
|---|---|---|---|---|---|---|---|
| 6 | 19.50 | 0.30 | 0.20 | --- | --- | 0.04 | 0.20 |
| 7 | 19.30 | 0.30 | 0.20 | 0.20 | --- | 0.04 | 0.20 |
| 8 | 19.10 | 0.30 | 0.20 | 0.40 | --- | 0.04 | 0.20 |
| 9 | 19.30 | 0.30 | 0.20 | --- | 0.20 | 0.04 | 0.20 |
| 10 | 19.10 | 0.30 | 0.20 | --- | 0.40 | 0.04 | 0.20 |

The following results were obtained with the formulations.

3/8-24 Grade 2 Steel Nuts and Bolts

15 min cure - Nm (in-lb) (break/prevail)

| Expt # | 82°C stability (hr) | Fresh mean | | Fresh s.d. | | Aged 4 wks @48.89°C [120°F] mean | | Aged 4 wks @48.89°C [120°F] s.d. | |
|---|---|---|---|---|---|---|---|---|---|
| 6 | >24 | 4.07/4.97 | (36/44) | [1.36/2.83] | [(12/25)] | 0.90/1.36 | (8/12) | [1.58/2.37] | [(14/21)] |
| 7 | >24 | 7.23/10.39 | (64/92) | [2.83/5.42] | [(25/48)] | 6.33/15.82 | (56/140) | [4.18/13.56] | [(37/120)] |
| 8 | >24 | 7.68/18.07 | (68/160) | [2.83/6.10] | [(25/54)] | 1.81/3.62 | (16/32) | [0.79/2.03] | [(7/18)] |
| 9 | >24 | 11.75/24.41 | (104/216) | [1.58/9.38] | [(14/83)] | 1.36/3.16 | (12/28) | [1.36/3.16] | [(12/28)] |
| 10 | 5 | 6.32/18.52 | (56/164) | [2.03/11.41] | [(18/101)] | gelled | | | |
| | s(pooled) | 2.22/7.65 | | | (19.6/67.7) | 2.37/7.47 | | | (21/66.1) |
| | d.f. | | | | 10 | | | | 8 |
| | t (95% conf. level) | | | | 2.23 | | | | 2.31 |
| | min. dif. | (2.83/9.82) | | | (25/87) | 3.16/9.94 | | | (28/88) |

The cure speed of the formulations containing the polymeric hydroperoxide is essentially equivalent to those containing cumene hydroperoxide and significantly better than without hydroperoxide. After aging at 48.89 °C (120 °F) the formulation containing 2% polymeric hydroperoxide (# 10) had gelled. The formulation with 1% polymeric hydroperoxide (# 9) had lost a substantial amount of its original cure speed as had the formulation with 2% cumene hydroperoxide. The only formulation which had maintained its original cure speed was # 7 with 1% cumene hydroperoxide.

EXAMPLE 3.

p-Isopropyl-α-methylstyrene was polymerized in toluene using a cationic initiator using the same procedure as described in Example 1. This polymer was autoxidized by the procedure described by Vandenberg in U.S. Patent 2,911,387. The polymer was oxidized to an active oxygen content of 6.4% which is equivalent to 73 mole % hydroperoxide.

A structural adhesive formulation was prepared containing this polymeric hydroperoxide and comparing it to the same formulation containing cumene hydroperoxide. The formulation contained the following ingredients.

| | |
|---|---|
| Block Methacrylate Resin* | 59.15 |
| Hydroxypropyl methacrylate | 12.56 |
| Isobornyl methacrylate | 7.53 |
| Lauryl methacrylate | 12.56 |
| Acrylic acid | 5.00 |
| 1-Acetyl-2-phenylhydrazine | 1.00 |
| Saccharin | 1.00 |
| Hydroperoxide | 1.00 |
| Naphthoquinone (5% in PEGMA) | 0.20 |
| Na4EDTA (3% in 80% MeOH/H2O) | 1.00 |
| | ------ |
| | 101.00 |

*Urethane alkylene methacrylate capped polytetramethylene glycol

The hydroperoxides used were the polymeric hydroperoxide described in Example 2 above containing 73 mole % hydroperoxide (expt. 11) and cumene hydroperoxide which contained about 70% by weight of the active hydroperoxide (expt 12). These formulations were used to prepare lapshear test specimens using sandblasted steel coupons 2.54 x 10.16 x 0.12cm (1" X 4" X 1/16"). A 1.27cm (1/2") overlap was used to give a 1.27cm (1/2") bond area. Some of the test specimens were activated with a solution of copper 2-ethylhexanoate in 1,1,1-trichloroethane which is known as "Primer N." The following results were obtained:

| | | Polymeric Hydroperoxide Expt # 11 | | Cumene Hydroperoxide Expt # 12 | |
|---|---|---|---|---|---|
| | | mean | std. dev. | mean | std. dev. |
| One hour cure Pa(psi) | | | | | |
| 0 Gap | no primer | 1.2(175) | 0.28(40) | 1.99(290) | 0.72(105) |
| 0 Gap | Primer N | 12.9(1870) | 0.07(10) | 13.17(1910) | 5.65(820) |
| 0.51 cm (.02") Gap | Primer N | 0.06(8) | 0.03(4) | 0.21(30) | 0.06(8) |
| 24 hour cure Pa(psi) | | | | | |
| 0 Gap | no primer | 9.85(1429) | 0.48(69) | 10.40(1509) | 1.01(146) |
| 0 Gap | Primer N | 14.22(2062) | 3.45(501) | 22.06(1691) | 0.75(109) |
| 0.51cm(.02") Gap | Primer N | 3.98(577) | 0.17(25) | 3.81(552) | 0.09(13) |
| Pooled Std Dev. | | 1.97(285) | | | |
| Degrees of freedom | | 12 | | | |
| t for 95% conf. level | | 2.18 | | | |
| Minimum difference | | 3.03 Pa (440 psi) | | | |

Duplicate tests were done for each cure condition and the standard deviations for each test were pooled to give an overall standard deviation of 285. The Student's t distribution for this number of degrees of freedom gives a minimum difference of 440 psi. It appears from this data that the polymeric hydroperoxide and cumene hydroperoxide perform equally.

EXAMPLE 4.

Mixed meta and para isomers of isopropyl-α -methylstyrene were polymerized using the procedure described in Example 1. This polymer was autoxidized by the procedure described by Vandenberg in U.S. Patent 2,911,387. The polymer was oxidized to an active oxygen content of 5.26% which is equivalent to 59 mole % hydroperoxide.

A series of structural formulations were prepared containing this hydroperoxide and were compared to

formulations containing cumene hydroperoxide. The formulations contained the following ingredients:

| Experiment # | 13 | 14 | 15 | 16 | 17 | 18 |
|---|---|---|---|---|---|---|
| Block Methacrylate Resin* | 19.64 | 19.63 | 19.30 | 19.30 | 18.90 | 18.87 |
| Hydroxypropyl methacrylate | 4.17 | 4.17 | 4.10 | 4.10 | 4.01 | 4.01 |
| Isobornyl methacrylate | 2.50 | 2.50 | 2.46 | 2.46 | 2.41 | 2.40 |
| Lauryl methacrylate | 4.17 | 4.17 | 4.10 | 4.10 | 4.01 | 4.01 |
| Acrylic acid | 1.65 | 1.65 | 1.65 | 1.69 | 1.65 | 1.64 |
| 1-Acetyl-2-phenylhydrazine | .33 | .33 | .33 | .33 | .33 | .33 |
| Saccharin | .33 | .33 | .33 | .33 | .33 | .34 |
| Cumene hydroperoxide | .165 | -- | .66 | -- | 1.32 | -- |
| Polymeric hydroperoxide | -- | .165 | -- | .66 | -- | 1.32 |
| Naphthoquinone (5% in PEGMA) | .07 | .07 | .07 | .07 | .07 | .07 |
| Na4EDTA (3% in 80% MeOH/H2O) | .33 | .33 | .33 | .33 | .33 | .33 |

*Urethane alkylene methacrylate capped polytetramethyleneglycol

When these formulations were prepared it was found that those containing 2% (#16) and 4% (#18) of the polymeric hydroperoxide were unstable and they gelled before the hydroperoxide could be completely incorporated. The remaining formulations were tested on sandblasted steel and dichromate etched aluminum coupons 2.54 x 10.16 x 0.12 cm (1" x 4" x1/16") as in Example 3. The following results were obtained:

| Expt. # | 13 | | 14 | | 15 | | 17 | |
|---|---|---|---|---|---|---|---|---|
| Hydroperoxide | Cumene | | Polymeric | | Cumene | | Cumene | |
| Amount | 0.5% | | 0.5% | | 2.0% | | 4.0% | |
| One hour cure Pa(psi) | Mean | S.D. | Mean | S.D. | Mean | S.D. | Mean | S.D. |
| Sandblasted Steel | | | | | | | | |
| 0 Gap no primer | 0.83(120) | 0.25(36) | 0.62(9) | 0.07(10) | 1.55(225) | 0.38(55) | 1.50(218) | 0.27(39) |
| 0 Gap Primer N | 12.24(1775) | 1.72(250) | 8.31(1205) | 1.03(150) | 8.72(1265) | 5.52(800) | 14.51(2105) | 5.14(745) |
| 0.51 cm(0.02") Gap | | | | | | | | |
| Primer N | 0.26(37) | 0.06(8) | 0.35(50) | 0.15(22) | 0.05(7) | $6.89x10^{-3}$(1) | 0.10(15) | $6.89x10^{-3}$(1) |
| Etched Aluminum | | | | | | | | |
| 0 Gap no primer | 6.59(957) | 0.63(91) | 5.67(823) | 0.52(76) | 8.34(1210) | 2.48(359) | 9.86(1430) | 0.72(104) |
| 0 Gap Primer N | 16.78(2433) | 2.36(342) | 10.34(1500) | 1.57(227) | 15.1(2193) | 2.90(421) | 13.72(1990) | 3.31(480) |
| 0.51 cm(0.02") Gap | | | | | | | | |
| Primer N | 0.09(13) | 0.02(3) | 0.07(10) | 0.01(2) | 0.08(11) | 0.01(2) | 0.14(20) | 0.06(8) |
| 24 Hour cure | | | | | | | | |
| Sandblasted Steel | | | | | | | | |
| 0 Gap no primer | 9.07(1315) | 2.10(305) | 7.56(1097) | 1.08(157) | 10.02(1453) | 1.12(162) | 9.47(1373) | 1.59(230) |
| 0 Gap Primer N | 16.58(2405) | 1.59(230) | 10.99(1595) | 1.69(245) | 12.93(1875) | 1.86(270) | 15.85(2300) | 1.86(270) |
| 0.51 cm(0.02") Gap | | | | | | | | |
| Primer N | 5.31(770) | 0.66(95) | 5.14(745) | 0.55(80) | 2.03(295) | 0.76(110) | 3.14(455) | 0.26(38) |

| Expt. # | 13 | | 14 | | 15 | | 17 | |
|---|---|---|---|---|---|---|---|---|
| Hydroperoxide | Cumene | | Polymeric | | Cumene | | Cumene | |
| Amount | 0.5% | | 0.5% | | 2.0% | | 4.0% | |
| 24 hour cure | Mean | S.D. | Mean | S.D. | Mean | S.D. | Mean | S.D. |
| Etched Aluminum | | | | | | | | |
| 0 Gap no primer | 13.84(2007) | 0.68(98) | 12.55(1820) | 2.66(386) | 10.91(1583) | 0.75(108) | 11.22(1627) | 2.83(410) |
| 0 Gap Primer N | 17.03(2470) | 0.46(66) | 11.99(1740) | 0.35(50) | 16.87(2447) | 1.68(244) | 13.65(1980) | 0.72(104) |
| 0.51 cm(0.02") Gap | | | | | | | | |
| Primer N | 2.83(411) | 0.55(80) | 4.47(648) | 0.71(103) | 1.58(229) | 0.92(134) | 2.43(353) | 0.69(101) |

| | 0 Gap No Primer | | 0 Gap Primer N | | 0.51cm(0.02") Gap Primer N | |
|---|---|---|---|---|---|---|
| | One hour | 24 hour | One hour | 24 hour | One hour | 24 hour |
| Pooled Std. Dev. | 0.97(141) | 1.79(259) | 3.32(482) | 1.41(205) | 0.06(8.9) | 0.66(96) |
| Degrees of freedom | 16 | 16 | 16 | 16 | 16 | 16 |
| t for 95% conf. level | 2.12 | 2.12 | 2.12 | 2.12 | 2.12 | 2.12 |
| Minimum difference | 1.19(173) | 2.19(317) | 4.07(590) | 1.73(251) | 0.08(10.9) | 0.81(118) |

Triplicate tests were carried out for each cure condition and the standard deviations were pooled. The value of the Student's t parameter for this number of tests was used to calculate a minimum significant difference between two means. Using these criteria it appears that the polymeric hydroperoxide is not quite as fast curing as cumene hydroperoxide at the 0.5% level. However the cure strength with a 0.05 cm (0.02") gap is higher with the polymeric hydroperoxide at 0.5% than with cumene hydroperoxide at 2 or

4%. With the etched aluminum the polymeric hydroperoxide is better than cumene hydroperoxide even at the 0.5% level. The solubility of the poly(isopropyl-α-methylstyrene) hydroperoxide does not permit measurement of the effect on gap cure with levels of 2% or higher.

EXAMPLE 5.

A mixture of m- and p-isopropyl-α-methylstyrene was polymerized in tetrahydrofuran solution with sec-butyllithium, an anionic initiator. The solvent was refluxed with lithium aluminum hydride to remove moisture and peroxide impurities and 15 ml was then distilled directly into the flask in which the polymerization was carried out. This flask had been carefully dried and the air had been removed and replaced with dry nitrogen. The flask was fitted with a rubber septum so that reagents could be added while excluding air and moisture. Dry isopropyl-α-methylstyrene (10.0 ml, 8.75 g) was added to the solvent using a syringe and the rubber septum. The monomer solution was cooled to -70 °C with dry ice while stirring with a magnetic stirrer. The initiator solution (1.0 ml 1.25 molar solution of sec-butyllithium in cyclohexane) was added with a syringe through the rubber septum the solution immediately changed from colorless to a deep red color characteristic of the anionic end group. The solution was allowed to stir overnight and the reaction was then quenched by the addition of 1.0 ml methanol. The now colorless solution was warmed to room temperature and the polymer was precipitated out in 400 ml rapidly stirred methanol. The polymer was filtered off, washed with methanol and dried in a vacuum oven to give 5.99 g, a 68.5% yield.

EXAMPLE 6.

A block copolymer of isopropyl-α-methylstyrene and methyl methacrylate was prepared in tetrahydrofuran solution using sec-butyllithium initiator and essentially the same procedure and apparatus as in Example 5. The mixture of m- and p-isopropyl-α-methylstyrene (10.0 ml, 8.75 g) was added to the distilled solvent using a syringe and the rubber septum. The solution was cooled to -70 °C with dry ice while stirring with a magnetic stirrer. The initiator solution (1.0 ml 1.25 molar solution in cyclohexane) was added with a syringe through the rubber septum. The solution which was a dark red color was allowed to stir at -70 °C for one hour. Methyl methacrylate monomer was dried and the polymerization inhibitor was removed by passing it through a column of activated alumina. 4.0 ml (3.78 g) Methyl methacrylate was added to the polymer solution using a syringe and the rubber septum. The color immediately changed from the deep red color of the isopropyl-methylstyrene anion end group to a bright yellow color which is characteristic of the methyl methacrylate anion end group. The solution was stirred overnight at 0 °C and was then quenched by the addition of 1.0 ml methanol. The polymer was precipitated by pouring the colorless solution into 400 ml of rapidly stirred methanol. The polymer was filtered off, washed with methanol and dried in the vacuum oven. The dried polymer weighed 8.53 g (68% yield). The infrared spectrum of the polymer was very similar to that of the poly(isopropyl-α-methylstyrene) except that it also had a carbonyl absorbtion at 1738 cm-1.

The polymer prepared above was subjected to the autoxidation procedure described in Example 2 above and a polymeric hydroperoxide was obtained which contained about 60 mole % hydroperoxide. This block copolymer hydroperoxide was formulated into the following adhesives:

| Expt # | Polyethylene glycol dimethacrylate (g) | Saccharin (g) | 1-Acetyl-2-phenylhydrazide (g) | Maleic acid (g) | Cumene hydroperoxide (g) | Block copolymer hydroperoxide (g) | NQ 5% in PEGMA (g) | Na4EDTA 3% in MeOH/H2O (ml) |
|---|---|---|---|---|---|---|---|---|
| 19 | 18.76 | 0.3 | 0.2 | 0.1 | 0.6 | --- | 0.04 | 0.2 |
| 20 | 19.16 | 0.3 | 0.2 | 0.1 | 0.2 | --- | 0.04 | 0.2 |
| 21 | 19.36 | 0.3 | 0.2 | 0.1 | --- | --- | 0.04 | 0.2 |
| 22 | 18.76 | 0.3 | 0.2 | 0.1 | --- | 0.6 | 0.04 | 0.2 |
| 23 | 19.16 | 0.3 | 0.2 | 0.1 | --- | 0.2 | 0.04 | 0.2 |

The following tests were performed on these formulations.

3/8-16 Nuts & Bolts

| Expt # | 82°C Stab. (hrs) | One hour cure break/prevail Nm(in-lb) GR-5 Steel | One hour cure break/prevail Nm(in-lb) Zinc | Fixture Time (min) GR-5 Steel | Fixture Time (min) Zinc |
|---|---|---|---|---|---|
| 19 | 1 | 5.65/16.38(50/145) | 5.88/17.74(52/157) | 16 | 26 |
| 20 | >24 | 9.60/28.81(85/255) | 3.62/4.86(32/43) | 12 | 59 |
| 21 | >24 | 0.23/0(2/0) | 0/0(0/0) | 83 | 120 |
| 22 | >24 | 6.77/23.16(60.205) | 0.56/0(5/0) | 13 | 56 |
| 23 | >24 | 5.65/23.73(50/210) | 1.92/2.83(17/25) | 12 | 68 |

These results show that the formulations with the block copolymer hydroperoxide are equivalent those with cumene hydroperoxide in cure speed on steel. The formulations with the block copolymer hydroperoxide are somewhat slower than those with cumene hydroperoxide on zinc but there is still a substantial improvement over the control with no hydroperoxide.

The same block copolymer hydroperoxide was used to prepare another set of formulations with a

different cure system.

| Expt # | Polyethylene glycol di-methacrylate (g) | Saccharin (g) | Diethyl-p-toluidine (g) | Dimethyl-o-toluidine (g) | Cumene hydro-peroxide (g) | Block copolymer hydro-peroxide (g) | NQ 5% in PEGMA (g) | Na4EDTA 3% in MeOH/H20 (ml) |
|---|---|---|---|---|---|---|---|---|
| 24 | 18.86 | 0.3 | 0.133 | 0.067 | 0.6 | --- | 0.04 | 0.2 |
| 25 | 19.26 | 0.3 | 0.133 | 0.067 | 0.2 | --- | 0.04 | 0.2 |
| 26 | 19.46 | 0.3 | 0.133 | 0.067 | --- | --- | 0.04 | 0.2 |
| 27 | 18.86 | 0.3 | 0.133 | 0.067 | --- | 0.6 | 0.04 | 0.2 |
| 28 | 19.26 | 0.3 | 0.133 | 0.067 | --- | 0.2 | 0.04 | 0.2 |

The following tests were performef with these formulations.

3/8-16 Nuts & Bolts

One hour cure

| Expt # | 82°C Stab. (hr) | break/prevail Nm(in-lb) GR-5 Steel | break/prevail Nm(in-lb) Zinc | Fixture Time (min) GR-5 Steel | Fixture Time (min) Zinc |
|---|---|---|---|---|---|
| 24 | 0.5 | 5.08/22.59(45/200) | 8.25/12.43(73/110) | 13 | 13 |
| 25 | >24 | 4.52/24.86(40/180) | 8.25/13.89(73/123) | 16 | 23 |
| 26 | >24 | 0.56/0(5/0) | 0.79/1.36(7/12) | 38 | 19 |
| 27 | >24 | 3.39/20.34(30/180) | 2.59/8.25(23/73) | 12 | 25 |
| 28 | >24 | 7.12/19.55(63/173) | 2.26/5.99(20/53) | 14 | 24 |

These results show that the formulations with the block copolymer hydroperoxide are equivalent to those with cumene hydroperoxide on the steel nuts and bolts. The cure speed on zinc nuts and bolts is somewhat slower for the formulations with the block copolymer hydroperoxide than for those with cumene

hydroperoxide.

Both sets of formulations with the block copolymer hydroperoxide have good stability with 3% of the polymeric hydroperoxide (expts 22 and 27) although this level of the homopolymer hydroperoxide was unstable in other formulations (expts 10, 16 & 18.)

EXAMPLE 7.

A commercial sample of p-isopropylbenzyl alcohol was reacted with methacrylic acid to prepare the methacrylate ester. The p-isopropylbenzyl alcohol (30.0 g, 0.20 mole) was placed in a 250 ml flask with 21.5 g (0.25 mole) methacrylic acid, 100 ml toluene, 0.5 g p-methoxyphenol and 0.1 g p-toluenesulfonic acid. The reaction mixture was stirred and heated to reflux with a Dean-Stark water separator until the evolution of water stopped. The solution was cooled to room temperature and washed with two 20 ml portions 5% aqueous sodium hydroxide and four 20 ml portions 5% aqueous sodium chloride. The stabilizer was replaced by adding 0.2 g p-methoxyphenol to the solution and the solvent was removed on a rotary evaporator with vacuum from a water aspirator. The product was distilled under vacuum and 17 g (39% yield) was collected at 101-111 °C at 13.33-26.66 Pa (0.1-0.2 Torr).

The monomer was polymerized in solution in chloroform. The monomer (10.9 g, 0.05 mole) was dissolved in 50 ml chloroform and 0.12 g (0.0005 mole) benzoyl peroxide was added. The chloroform solution was refluxed for 24 hours and the polymer was then precipitated by pouring the chloroform solution into 400 ml rapidly stirred methanol. The polymer was filtered off, washed with methanol and dried to give 6.9 g (64% yield).

The polymer was autoxidized using essentially the same procedure as Vandenberg (U.S. Patent 2,911,391). The poly(isopropylbenzylmethacrylate) (5.0 g) was dissolved 25 ml cumene. Cumene hydroperoxide (0.5 g) and calcium hydroxide (0.5 g) were added. The solution was stirred with a magnetic stirrer, heated to 90 °C and air was bubbled in through a glass capillary. This autoxidation reaction was continued for 72 hours. The viscous solution was diluted with 40 ml benzene and this solution was filtered into 200 ml rapidly stirred hexane. The precipitated polymer was redissolved in 20 ml benzene and reprecipitated in 200 ml hexane and dried under vacuum to give 2.5 g polymer.

A series of formulations were prepared to test the effectiveness of the autoxidized poly(p-isopropylbenzyl methacrylate) as an initiator in an anaerobic adhesive.

| Expt # | Polyethylene glycol di-methacrylate (g) | Saccharin (g) | 1-Acetyl-2-phenyl-Hydrazine (g) | Maleic acid (g) | Cumene hydro-peroxide (g) | Poly(p-iso-propylbenzyl methacrylate hydroperoxide (g) | NQ 5% in PEGMA (g) | Na4EDTA 3% in MeOH/H2O (ml) |
|---|---|---|---|---|---|---|---|---|
| 29 | 19.16 | 0.30 | 0.20 | 0.10 | 0.20 | --- | 0.04 | 0.20 |
| 30 | 18.76 | 0.30 | 0.20 | 0.10 | 0.60 | --- | 0.04 | 0.20 |
| 31 | 19.16 | 0.30 | 0.20 | 0.10 | --- | 0.20 | 0.04 | 0.20 |
| 32 | 18.76 | 0.30 | 0.20 | 0.10 | --- | 0.60 | 0.04 | 0.20 |
| 33 | 19.36 | 0.30 | 0.20 | 0.10 | --- | --- | 0.04 | 0.20 |

The following results were obtained on these formulations.

| Expt # | 82°C Stab. (hr) | 3/8-16 Nuts & Bolts, One hour cure, break/prevail Nm(in-lb): GR-5 Steel | Zinc |
|---|---|---|---|
| 29 | >24 | 7.57/24.52(67/217) | 7.57/15.48(67/137) |
| 30 | 2 | 12.77/25.54(113/226) | 3.95/11.86(35/105) |
| 31 | 1 | 7.12/13.56(63/120) | 5.31/12.09(47/107) |
| 32 | 0.5 | 7.57/23.39(67/207) | 1.92/4.63(17/41) |
| 33 | >24 | 0.57/0.23(5/2) | 0.34/0(3/0) |

The performance of the poly(p-isopropylbenzyl methacrylate) hydroperoxide appears to be nearly equal to that of cumene hydroperoxide although the stability of the formulations at 82 °C was not quite as good. The polymeric hydroperoxide appears to be somewhat more soluble than the poly(isopropyl-α-methylstyrene) hydroperoxide as shown in Examples 1 and 2.

Similar results may also be obtained by using the polymer of (meth)acrylic ether monomers obtained by reaction of isopropylbenzyl chloride with an alkali alkyleneglycolylate or polyglycolyate, such as sodium

ethyleneglycolate, followed by esterification of the resulting isopropylbenzyl hydroxyethyl ether with methacrylic or acrylic acid. Such monomers may be RDR 5/21/86 represented by the formula

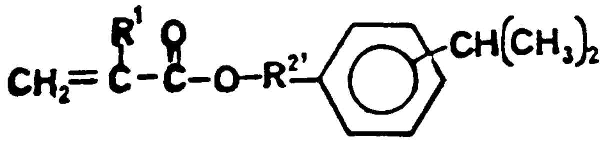

where R2' is a divalent hydrocarbon group interrupted by one or more ether oxygen atoms.

## Claims

1. A latently curable (meth)acrylate ester formulation comprising a (meth)acrylate ester and a hydroperoxide initiator, characterized in that the hydroperoxide initiator is a polymer having a plurality of pendant groups of the formula:

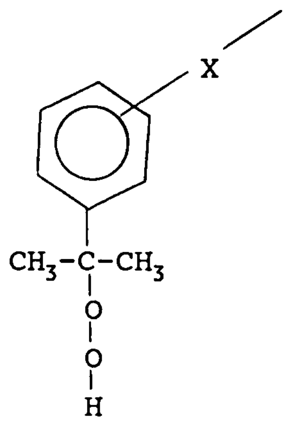

wherein X is a direct bond or a divalent organic linking group to the polymer backbone.

2. A formulation as claimed in Claim 1 characterized in that the polymer hydroperoxide is a polymer of isopropyl-alpha-methyl styrene.

3. A formulation as claimed in Claim 2 characterized in that the polymer is a copolymer with a (meth)-acrylate ester monomer.

4. A formulation as claimed in Claim 3 characterized in that the copolymer is a block copolymer.

5. A formulation as claimed in Claim 1 characterized in that the polymer is a polymer of a (meth)acrylate ester of the formula:

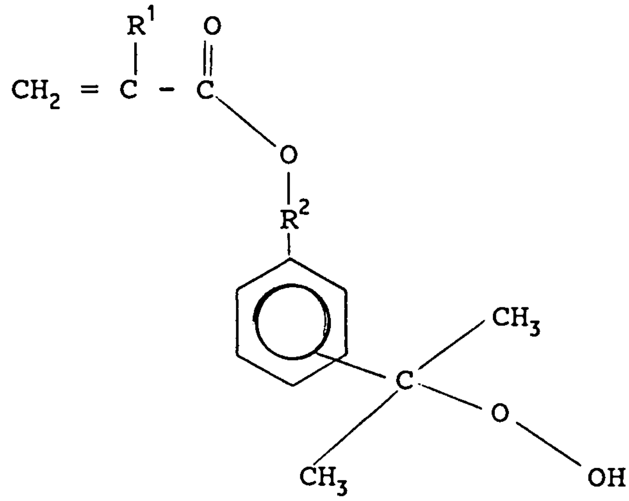

wherein $R^1$ is H or methyl and $R^2$ is a divalent hydrocarbon group which may optionally be interrupted by one or more ether oxygen atoms.

6. A formulation as claimed in Claim 1 characterized in that the polymer is an oxidized product obtained from a polymer having a plurality of isopropylphenyl groups pendantly bound thereto, the said oxidized product having in excess of 50% of the said isopropyl groups converted to $-C(CH_3)_2OOH$ groups.

7. A formulation as claimed in Claim 6 characterized in that 55-75% of the isopropyl groups have been oxidized to $- C(CH_3)_2OOH$ groups.

8. A formulation as claimed in any of Claims 1 to 7 further comprising polymerization accelerators and inhibitors in conventional amounts.

9. A formulation as claimed in any of Claims 1 to 8 characterized in that the polymer hydroperoxide is present in the amount of 0.1 to 10% by weight of the total composition.

10. A formulation as claimed in Claim 9 characterized in that the polymer hydroperoxide is present in an amount of 0.5 to 5% by weight of the total composition.

11. A polymerizable monomer of the formula:

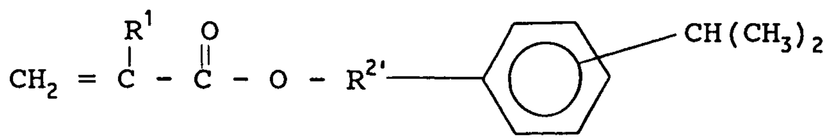

wherein $R^1$ is H or methyl and $R^{2'}$ is a divalent hydrocarbon group interrupted by one or more ether oxygen atoms.

12. A polymer of monomeric units derived from a polymerizable monomer of the formula:

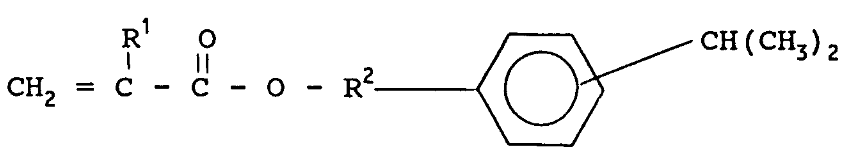

wherein $R^1$ is H or methyl and $R^2$ is a divalent hydrocarbon group which may optionally be interrupted by one or more ether oxygen atoms.

13. A hydroperoxide polymer suitable for use as an initiator of polymerization of (meth)acrylate ester monomers, the said hydroperoxide polymer comprising the autooxidization product of a polymer as claimed in Claim 12.

**Revendications**

1. Une composition d'ester (méth)acrylique á capacité de durcissement latente, comprenant un ester (méth)acrylique et un initiateur du type hydroperoxyde, caractérisée en ce que l'initiateur hydroperoxyde est un polymère comportant plusieurs groupes latéraux de la formule :

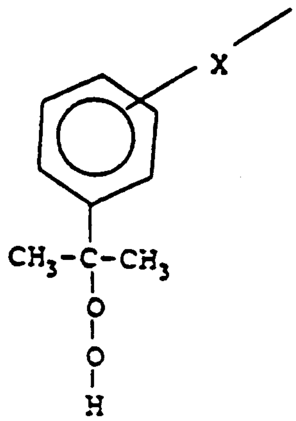

où X est une liaison directe ou un groupe organique divalent de jonction au squelette du polymère.

2. Une composition telle que revendiquée dans la revendication 1, caractérisée en ce que l'hydroperoxyde polymère est un polymère d'isopropyl-alpha-méthylstyrène.

3. Une composition telle que revendiquée dans la revendication 2, caractérisée en ce que le polymère est un copolymère formé avec un ester (méth)acrylique monomère.

4. Une composition telle que revendiquée dans la revendication 3, caractérisée en ce que le copolymère est un copolymère séquencé.

5. Une composition telle que revendiquée dans la revendication 1, caractérisée en ce que le polymère est un polymère d'un ester (méth)acrylique de la formule :

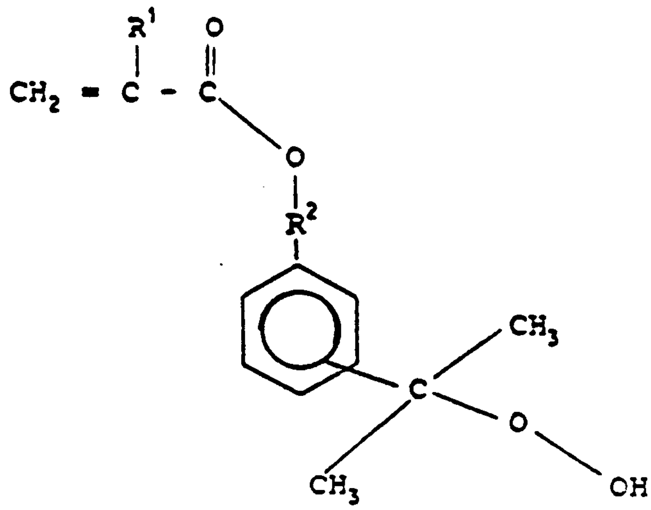

où $R^1$ est H ou un groupe méthyle et $R^2$ est un groupe hydrocarboné divalent qui peut facultativement

être entrecoupé d'un ou plusieurs atomes d'oxygène d'éther.

**6.** Une composition telle que revendiquée dans la revendication 1, caractérisée en ce que le polymère est un produit oxydé obtenu à partir d'un polymère comportant plusieurs groupes isopropylphényle qui lui sont liés latéralement, plus de 50 % desdits groupes isopropyle étant convertis en groupes $-C(CH_3)_2OOH$ dans ledit produit oxydé.

**7.** Une composition telle que revendiquée dans la revendication 6, caractérisée en ce que 55 à 75 % des groupes isopropyle ont été oxydés en groupes $-C(CH_3)_2OOH$.

**8.** Une composition telle que revendiquée dans l'une quelconque des revendications 1 à 7, comprenant de plus des accélérateurs et des inhibiteurs de polymérisation en des quantités classiques.

**9.** Une composition telle que revendiquée dans l'une quelconque des revendications 1 à 8, caractérisée en ce que l'hydroperoxyde polymère est présent en une quantité de 0,1 à 10 % en poids de la composition totale.

**10.** Une composition telle que revendiquée dans la revendication 9, caractérisée en ce que l'hydroperoxyde polymère est présent en une quantité de 0,5 à 5 % en poids de la composition totale.

**11.** Un monomère polymérisable de la formule :

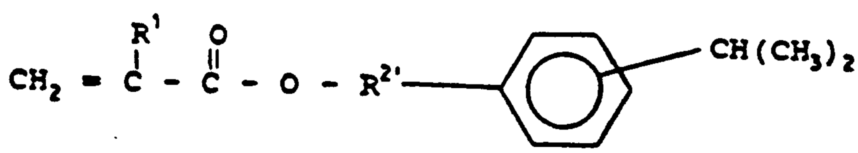

où $R^1$ est H ou un groupe méthyle et $R^{2'}$ est un groupe hydrocarboné divalent entrecoupé d'un ou plusieurs atomes d'oxygène d'éther.

**12.** Un polymère de motifs monomères dérivés d'un monomère polymérisable de la formule :

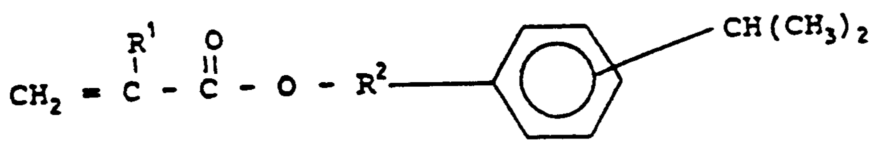

où $R^1$ est H ou un groupe méthyle et $R^2$ est un groupe hydrocarboné divalent qui peut facultativement être entrecoupé d'un ou plusieurs atomes d'oxygène d'éther.

**13.** Un polymère du type hydroperoxyde utilisable comme initiateur de polymérisation d'esters (méth)-acryliques monomères, ledit polymère hydroperoxyde comprenant le produit d'auto-oxydation d'un polymère tel que revendiqué dans la revendication 12.

## Patentansprüche

**1.** Latent härtbare (Meth)acrylatesterformulierung, welche einen (Meth)acrylatester und einen Hydroperoxidinitiator enthält, dadurch gekennzeichnet, daß der Hydroperoxidinitiator ein Polymer mit einer Vielzahl von anhängenden Gruppen der Formel ist:

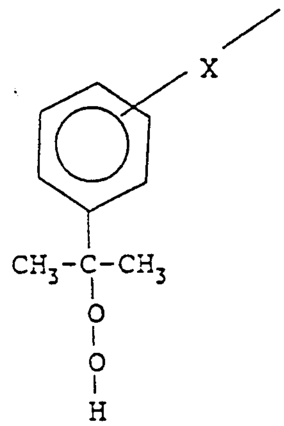

worin X eine direkte Bindung oder eine divalente organische Verbindungsgruppe zum Polymergerüst ist.

2. Formulierung nach Anspruch 1, dadurch gekennzeichnet, daß das polymere Hydroperoxid ein Polymer von Isopropyl-alpha-methylstyrol ist.

3. Formulierung nach Anspruch 2, dadurch gekennzeichnet, daß das Polymer ein Copolymer mit einem (Meth)acrylatestermonomer ist.

4. Formulierung nach Anspruch 3, dadurch gekennzeichnet, daß das Copolymer ein Blockcopolymer ist.

5. Formulierung nach Anspruch 1, dadurch gekennzeichnet, daß das Polymer ein Polymer von einem (Meth)acrylatester der Formel ist:

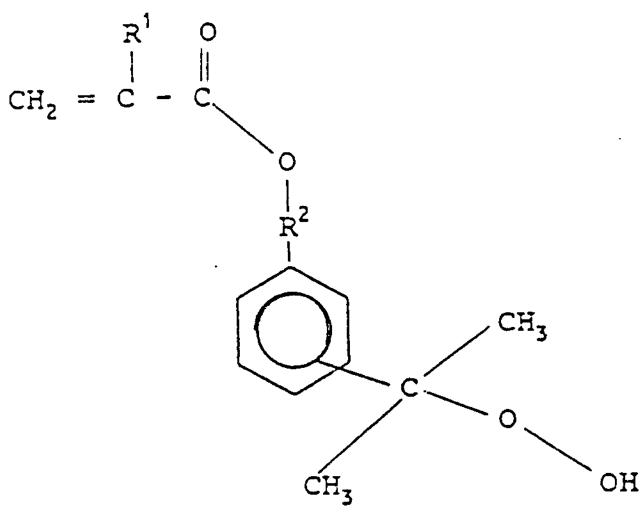

worin $R^1$ H oder Methyl ist und $R^2$ eine zweiwertige Kohlenwasserstoffgruppe ist, die gegebenenfalls durch ein oder mehrere Ethersauerstoffatome unterbrochen sein kann.

6. Formulierung nach Anspruch 1, dadurch gekennzeichnet, daß das Polymer ein von einem Polymer mit einer Vielzahl daran anhängend gebundener Isopropylphenylgruppen erhaltenes oxidiertes Produkt ist, wobei das oxidierte Produkt mehr als 50 % der Isopropylgruppen umgewandelt in $-C(CH_3)_2OOH$-Gruppen enthält.

7. Formulierung nach Anspruch 6, dadurch gekennzeichnet, daß 55 bis 75 % der Isopropylgruppen zu $-C(CH_3)_2OOH$-Gruppen umgewandelt sind.

**8.** Formulierung nach einem der Ansprüche 1 bis 7, welche weiterhin Polymerisationsbeschleuniger und -inhibitoren in üblichen Mengen enthält.

**9.** Formulierung nach einem der Ansprüche 1 bis 8, dadurch gekennzeichnet, daß das polymere Hydroperoxid in einer Menge von 0,1 bis 10 Gew.-% der gesamten Zusammensetzung zugegen ist.

**10.** Formulierung nach Anspruch 9, dadurch gekennzeichnet, daß das polymere Hydroperoxid in einer Menge von 0,5 bis 5 Gew.-% der gesamten Zusammensetzung zugegen ist.

**11.** Polymerisierbares Monomer der Formel:

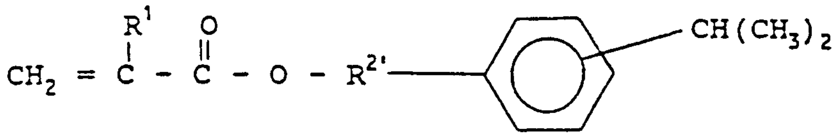

worin $R^1$ H oder Methyl ist und $R^{2'}$ eine zweiwertige Kohlenwasserstoffgruppe ist, die durch ein oder mehrere Ethersauerstoffatome unterbrochen ist.

**12.** Polymer aus monomeren Einheiten, die von einem polymerisierbaren Monomer der Formel:

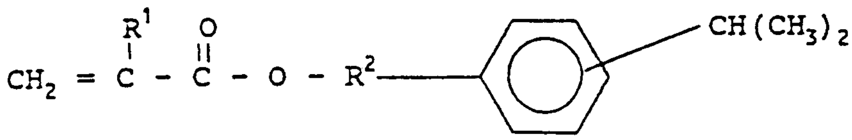

abgeleitet sind, worin $R^1$ H oder Methyl ist und $R^2$ eine zweiwertige Kohlenwasserstoffgruppe ist, die gegebenenfalls durch ein oder mehrere Ethersauerstoffatome unterbrochen sein kann.

**13.** Zur Verwendung als Initiator für die Polymerisation von (Meth)acrylatestermonomeren geeignetes Hydroperoxidpolymer, welches das Autoxidationsprodukt eines Polymers nach Anspruch 12 enthält.